# EUROPEAN PATENT SPECIFICATION

(11) **EP 2 529 176 B1**
(45) Date of publication and mention of the grant of the patent: **25.04.2018**
(21) Application number: 11744223.6
(22) Date of filing: 18.02.2011
(51) Int. Cl.: F41H 1/02, B32B 27/08, B32B 5/08, F41H 5/04

(54) **USE OF MACHINE DIRECTION ORIENTED FILMS IN BALLISTIC ARTICLES**
VERWENDUNG VON AN EINER MASCHINENRICHTUNG ORIENTIERTEN FILMEN IN BALLISTISCHEN ARTIKELN
UTILISATION DE FILMS ORIENTÉS DANS LE SENS MACHINE POUR DES ARTICLES BALISTIQUES

(30) Priority: 19.02.2010 US 306293 P
(43) Date of publication of application: 05.12.2012
(73) Proprietor: Barrday Inc., Cambridge, ON N1T 1S2 (CA)
(72) Inventor: PATEL, Chinkalben, Ancaster, Ontario L9K 0A5 (CA)
(74) Representative: inCompass IP Europe Limited
(86) International application number: PCT/CA2011/000189
(87) International publication number: WO 2011/100831

(56) References cited:
- WO-A1-03/053676
- WO-A1-2005/066577
- WO-A1-2007/070130
- WO-A1-2008/091321
- WO-A1-2009/017955
- WO-A1-2011/022090
- US-A1- 2004 092 183
- US-A1- 2006 148 361
- US-A1- 2007 099 526
- US-A1- 2009 325 448

## Description

### FIELD

This application relates to the field of protective and ballistic-resistant articles, and more particularly to fabric composites suitable for use in protective and ballistic-resistant articles.

### BACKGROUND

High performance protective composites suitable for use in stab, impact, blast and/or ballistic-resistant articles are known in the art. Such materials often include layers of woven or non-woven fabrics made from high-performance fibers or yarns. Commonly used non-woven fabrics include unidirectional (UD) fabrics with layers of fibers aligned to be substantially parallel to one another along a common fiber direction.

Typically, matrix resins, films or combination of both are used in ballistic-resistant or high performance fabric articles to hold fibers in a desired orientation, to promote adhesion between adjacent fabric layers or to serve as an exterior surface protective layer. Commonly used films or laminates include those made by extrusion blowing elastomeric materials such as styrenic block copolymers, polyolefins, polyesters, polyether esters, or polyamides. Commonly used resins include elastomeric or hard polymeric resins such as those made from styrenic block copolymers or polyisoprenes etc. US 2004/0092183 discloses a ballistic resistant composite material made of a plurality of monolayers that include at least two distinct types of polymeric fibers. In one embodiment, two linear films of low density polyethylene (6-7 µm thick) were adjoined on both external sides of the composite material.

In soft armor ballistic-resistant articles abrasion resistance is a critical quality. Soft armor articles are typically comprised of multiple layers of composite materials such as unidirectional (UD) fabrics. As a result, adjacent layers within the ballistic article abrade against each other during normal handling and wear. To ensure performance and product integrity are not comprised due to abrasion during routine operations and regular wear, fabrics suitable for use in ballistic articles are tested to specific abrasion resistance thresholds such as ASTM D3886-99 (Stoll Abrasion).

Many UD products have limited abrasion resistance when tested against UD or woven fabrics. Particularly in soft armor applications, outer surfaces of UD are laminated with thermoplastic films. Films are typically lightly adhered to the UD sheets to minimize impregnation of the fibers by the film or adhesive. As a result, during abrasion testing polymer films come off with relative ease and fiber construction easily weakens.

Abrasion resistance is also a desirable quality in hard ballistic articles that are relatively inflexible compared to soft ballistic articles. External layers of abrasion resistant material in hard ballistic articles can help prevent structural failures of the underlying composite materials in response to an abrasive environment.

There is a need for improved protective and ballistic-resistant articles, and in particular protective and ballistic-resistant composites with improved abrasion resistance.

### SUMMARY

The present disclosure relates generally to novel protective materials, assemblies thereof, and to methods by which they are made. More specifically, the present disclosure describes the use of Machine Direction Oriented (MDO) films in the construction of woven or non-woven composites for use in ballistic-resistant or protective articles that exhibit excellent abrasion resistance.

In one aspect of the disclosure, it has been determined that protective materials made with MDO polymer film have excellent abrasion resistance properties. In particular, protective materials made with fabric composites laminated with MDO polymer films are shown to have both excellent and consistent abrasion resistance. In contrast, fabric composites made using regular grade blown polymer films exhibited relatively poor and highly variable abrasion resistance.

Accordingly, in one embodiment there is provided a ballistic resistant composite comprising one or more layers of fabric in contact with a matrix and a film, wherein the film is a machine direction oriented (MDO) film laminated to at least a portion of an exterior surface of the composite. In one embodiment, MDO film is bound to a consolidated network of fabric in contact with a matrix material. In one embodiment, the fabric is a unidirectional fabric. In one embodiment, MDO film can be laminated to the inter or inner surfaces of a multi-laminate woven or non-woven construction.

In one embodiment, the fabric may be a woven fabric or a non-woven fabric. In one embodiment, the fabric is a unidirectional fabric and the fibers of the unidirectional fabric are held in place by the matrix. In one embodiment, the ballistic resistant composite comprises 2 or more layers of unidirectional fabric that are cross-plied such that the fiber direction in adjacent plies is perpendicular.

In one embodiment, the MDO film is less than 2 mil (50.8 microns) thick, or less than 0.6 mil (15.2 microns) thick. Optionally, the MDO film is between 0.25 mil (6.4 microns) and 0.75 mil (19.1 microns) thick. In one embodiment, the MDO film is made of polymeric material such as polyethylene. In one embodiment, the MDO film has a draw ratio of between 1:2 and 1:10.

In one embodiment, the ballistic resistant composite comprises a matrix. In one embodiment, the matrix is an elastomeric resin matrix. In one embodiment, the matrix is a styrene-isoprene-styrene block copolymer, such as those available under the trade-names Prinlin B7137 HV and AL. Optionally, the matrix may comprise between 1% and 80% of the total weight of the composite. In one embodiment, the matrix comprises greater than 15% of the total weight of the composite. In one embodiment, the matrix comprises between 15% and 20% of the total weight of the composite, or about 17% of the total weight of the composite. As used herein the term "total weight of the composite" refers to the dry weight of the high performance fibers that comprise the constituent woven or non-woven fabric and the matrix, and excludes the weight of any additional film layers, such as MDO or other films.

In one embodiment, the ballistic resistant composites described herein exhibit excellent abrasion resistance. In one embodiment, the ballistic resistant composite when tested according to ASTM D3886-99 exceeds a threshold of 2500 cycles without showing any signs of significant or noteworthy degradation to the MDO film. In one embodiment, the ballistic resistant composite when tested according to ASTM D3886-99 exceeds a threshold of 2500 cycles without showing a separation of greater than 3 mm in the first layer of fabric yarns adjacent to the MDO film. In one embodiment, the ballistic resistant composite exceeds a threshold of 5,000 or 10,000 cycles when tested according to ASTM D3886-99.

In another aspect, there is provided a ballistic resistant article comprising a plurality of the ballistic resistant composites as described herein. In one embodiment, layers of a ballistic resistant composite are stacked or combined to form an article that exhibits a desired level of ballistic protection as is known in the art.

In another aspect, there is provided a method of producing a ballistic resistant article comprising one or more layers of fabric, a matrix and a film, wherein the film is a machine direction oriented film and the method comprises applying the MDO film onto at least one exterior surface of a consolidated network of the one or more layers of fabric in contact with the matrix and laminating the MDO film to the exterior surface of the consolidated network. In one embodiment, the method comprises using heat and/or pressure to laminate the MDO film to the surface of the network. In one embodiment, the method comprises uses an adhesive to laminate the MDO film to the surface of the network.

Further aspects and advantages of the embodiments described herein will appear from the following description taken together with the accompanying drawings.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment, and in which:
Figure 1 shows a cross section of a ballistic resistant composite according to one embodiment of the present description. 4 layers of unidirectional fabric are cross-plied such that adjacent layers of fibers are perpendicular. The layers of fibers are typically surrounded by a matrix (not shown), which holds the fibers in the desired orientation. MDO film is laminated to the exterior surfaces of the 4-ply UD composite fabric.
Figure 2 shows photographs after abrasion testing as set out in Examples 1 and 2 of protective materials made from a unidirectional composite with a regular film (A), unidirectional composite with regular film plus a slip agent (B) and unidirectional composite made with MDO film (C).
Figure 3 shows a graphical representation of the maximum acceptable gap (void) tolerance for testing abrasion (3 mm) according to ASTM D3886-99 as described in Example 1.

### DETAILED DESCRIPTION

It has been determined that the use of machine direction oriented (MDO) film is useful in the construction of protective and/or ballistic-resistant articles. As described herein, high performance fabric composites that comprise MDO films exhibit improved abrasion resistance to comparable composites made using regular films.

Accordingly, the invention includes novel ballistic resistant composites that comprise MDO film laminated to one or more layers of fabric, assemblies thereof, their use and methods by which they are made. In one embodiment, the MDO film is bound or laminated to a composite comprising one or more layers of high performance fabric in contact with a matrix.

Exemplary embodiments make use of fabric made from what are commonly described as high performance fibers. Generally speaking, a high performance fiber is a fiber having a tenacity of about 15 grams per denier and higher, and tensile modulus of at least about 400 grams per denier. Examples are aramid or para-aramid fibers, ultra-high molecular weight polyethylene fibers, poly(p-phenylene-2,6-benzobisoxazole) (PBO) fibers, polyolefin fibers, liquid crystal fibers and glass fibers. Aramid and copolymer aramid fibers are produced commercially by DuPont, Teijin Aramid and Teijin under the trade names Kevlar™, Twaron™, and Technora™, respectively. Ultra-high molecular weight polyethylene fibers are produced commercially by Honeywell, DSM, and Mitsui under the trade names Spectra™, Dyneema ™, and Tekmilon™, respectively. Polyethylene fibers and tapes are produced by Integrated Textile Systems Inc. and sold under the trade name Tensylon™. Poly(p-phenylene-2,6-benzobisoxazole) (PBO) is produced by Toyobo under the commercial name Zylon™. Polyolefin fibers are produced under the trade name Innegra™. Liquid crystal polymers are produced by Kuraray under the trade name Vectran™. As used herein, "fiber" refers to an elongated body for which the length dimension is greater than the transverse dimension or width. The term "fiber" includes filaments, ribbons, strips, or other irregularly shaped fibers with a symmetrical or asymmetrical cross section. In some embodiments, a plurality of fibers running in the same longitudinal direction may constitute a fiber/yarn.

Other fabrics contemplated for use in embodiments of the protective materials described herein include those made from extended chain polypropylene fiber, polyvinyl alcohol fiber, polyacrylonitrile fiber, and carbon fiber.

It will be understood that a particular fabric used may be made from a single type of fiber, or from various types of fibers. The fabric may also include various types of fibers in each yarn or in different yarns that are combined to make a fabric layer.

As used herein, "fabric" or "fabric layer" refers to a plurality of fibers that have been arranged so as to form a continuous sheet. The fabric can be a knitted, woven or non-woven structure or network of fibers. Woven fabrics include any weave such as a plain weave, crowfoot weave, basket weave, satin weave, twill weave, proprietary weaves or the like. The fabric may also be plied, that is, consisting of one or more layers attached together using an adhesive, thermal adhesive, stitching, matrix, or any other method known in the art for combining layers of fabric.

In one embodiment, the fabric is a non-woven unidirectional (UD) fabric. As used herein, a "unidirectional fabric layer" refers to a series of fibers combined so as to form a continuous sheet wherein the fibers are all substantially aligned to be parallel in a common longitudinal direction. In one embodiment, the fibers are held in place in a UD fabric using a matrix, resin, film, stitching, knitted fabric or woven fabric or any other method known in the art. In one embodiment, the fibers in a unidirectional fabric layer are held in place by one or two adjacent layers of adhesive MDO film.

As used herein, the term "composite" refers to a material comprising high performance fibers in contact with a matrix. As used herein, the term "matrix" refers to a material that contacts and consolidates fibers in a composite. In one embodiment, the matrix is a thermoplastic resin matrix or polymeric resin matrix made from styrenic block copolymers, polyisoprene, ethylene-propylene copolymers, nitrile butadiene rubber, polyvinyl butyral, ethylene vinyl acetate copolymer, polyketones, polychloroprene, polyvinyl acetate, polyisobutylene or polyether block amide. In one embodiment, the matrix is a styrene-isoprene-styrene copolymer or resin matrix. In one embodiment, the matrix is an elastomeric matrix. Typically, use of an elastiomeric matrix in a ballistic resistant composite as described herein will result in a flexible composite suitable for use in soft armor applications. Preferred properties for an elastomeric matrix include: tensile modulus < 6,000 psi, tensile strength < 500 psi, elongation > 500 % and Tg (Glass transition) < 0°C.

In one embodiment, the matrix is a hard ballistic matrix. Typically, use of a hard ballistic matrix in a ballistic resistant composite as described herein will result in an inflexible composite suitable for use in hard armor applications. Preferred properties for hard ballistic matrix include: tensile modulus: > 1000 psi, tensile strength > 500 psi, elongation < 1,000 % and Tg > -30 °C.

Mechanical properties of a matrix can be enhanced by compounding the base polymers with fillers such as carbon black, macro silica, nano silica, nano clay, exfoliated nano clay etc., and may be vulcanized by sulfur, peroxide, metal oxide or UV/EB crosslinking techniques which are well known to rubber technology. Blends of various elastomeric systems may be used together or one or more elastomer materials may be blended with one or more other thermoplastic matrix systems as known in the art.

In one embodiment, unidirectional fabrics are produced by impregnating one or more layers of unidirectional fibers with a matrix or thermoplastic resin system as is commonly known in the art. For example, in one embodiment high performance fibers are coated or encapsulated with a matrix that binds the fibers into a consolidated fabric sheet. In one embodiment, two or more layers of unidirectional fabric may be cross-plied together to form a single sheet that can be used in the construction of ballistic articles. The matrix can be applied to the fibers in a number of ways known in the art, such as by bathing, spraying or roll coating the fibers with a matrix solution followed by a drying step. The matrix can also be applied as a gel emulsion in a solvent which later evaporates. The ballistic resistant composites as described herein can be produced with a matrix comprising between 1% and 80% of the total weight of the composite. In a one embodiment, the matrix comprises more than 10%, more than 15%, or between 15% and 20% of the total weight of the composite. As used herein the term "total weight of the composite" refers to the dry weight of the high performance fibers that comprise the constituent woven or non-woven fabric and the matrix, and excludes the weight of any additional film layers, such as MDO or other films.

As used herein, a "machine direction oriented film" or "MDO film" refers to a film made from a polymer or blend of polymers that has been strained under a uni-axial stress such that the polymers in the film become aligned in the direction of the stress.

In some embodiments, the machine direction oriented (MDO) film consists of film produced by orienting cast extrusion films. For example, a film of molten polymer may be extruded onto a chill roll, which quenches it into an amorphous state. The film may then be uniaxially oriented by drawing the film in the 'machine direction' such as by using heated rollers or in a heated oven.

Machine direction oriented (MDO) films have enhanced physical properties compared to randomly-oriented polymer films due to their linear molecular orientation. Subjecting a polymer film to a uni-axial stress results in the polymer molecules becoming oriented in the direction of the pull.

Other methods of producing MDO films include first performing a method known in the art for producing a film such as calendering, cast-extrusion, cast-co-extrusion, blown-film extrusion or blown film co-extrusion followed by stretching the film. In one embodiment, the film is stretched by feeding it through a series of differential draw rolls, wherein the rolls are running at gradually increasing speeds. In some embodiments the rolls are heated so as facilitate the stretching process. In some embodiments, the film is cooled after stretching in order to set the orientation of the film. The film may be drawn just once, or multiple times. Examples of commercially available MDO orientation systems include those available from Eclipse Film Technologies, Hamilton, Ohio, USA such as XE0-07014B and XEO-07014.

MDO films can be made from polymers or copolymers known in the art such as, but not limited to, polyolefins, polyethylene, polypropylenes, polyesters, polyether esters, polyamides, ethylene-vinyl acetate copolymers, polyvinyl chloride, poly vinylidene chloride, polyvinyl alcohol, polyvinyl acetate, polystyrene, ethylene vinyl alcohol copolymers, ethylene-propylene-butylene terpolymer, copolymers or polymonochlorotrifluoroethylene and all practical polymeric-film materials.

In one embodiment, the MDO film has a thickness of less than 2 mil (50.8 microns). Optionally, the MDO film has a thickness of less than 0.6 mil (15.2 microns), less than 0.35 mil (8.9 microns), or less than 0.25 mil (6.4 microns). In one embodiment, the MDO film has a thickness of about 0.5 mil (12.7 microns).

In one embodiment the draw ratio of the MDO film is between 1:1.5 and 1:20. In one embodiment, the draw ratio of the MDO film is between 1:2 and 1:10, or between 1:3 and 1:8. A person of skill in the art will appreciate that a suitable draw ratio for an MDO film will depend on the constituent polymer used to manufacture the film.

In one embodiment, there is provided a ballistic-resistant article comprising at least one unidirectional fabric layer and at least one MDO film, wherein the MDO film is attached to at least a portion of an exterior surface of the composite.

The layers that constitute the ballistic resistant composites described herein may be bound or laminated together by various techniques known in the art, such as the application of an adhesive between the layers, the application of heat and/or pressure, or physically attaching the layers such as by stitching or needle punching the layers. The layers of the invention may also be secured together through a combination or plurality of means.

According to the invention, the MDO film is laminated to a composite. As used herein, "laminated" refers to contacting two surfaces such that they adhere to one another. In one embodiment, the MDO film is laminated to the composite by contacting the surface of the film with the composite and applying heat and/or pressure. In one embodiment, the film and composite adhere through the action of the matrix which contacts and adheres to the MDO film. For example, the fabric can comprise a coating or matrix which acts as the binding agent for laminating the fabric to MDO film when heat and/or pressure is applied to the MDO film and UD fabric. In one embodiment, low modulus elastomeric binders, tackifiers and/or resins are utilized to laminate the MDO film to the fabric or composite.

In one embodiment, the MDO film is bound to a fabric layer, matrix or composite using an adhesive. For example, in one embodiment the MDO film is coated with an adhesive on one side of the film and the coated side is then applied to the surface of the composite or fabric layer. In one embodiment, the composite or fabric layer may be coated with a suitable adhesive before applying the MDO film to the surface of the fabric.

The MDO films can be bonded or laminated to the surface of a composite or to a fabric layer in any orientation. For example, when the fabric layer is a UD fabric, the axial orientation of the MDO film and direction of fibers in an adjacent UD layer can be at any angle. For instance, a UD layer can be laminated with a MDO film such that the molecular orientation of the film is perpendicular to the fiber orientation in the UD layer. The weakest point of a single (monolayer) unidirectional layer is the direction perpendicular to the fiber direction. The use of MDO film may therefore strengthen the horizontal or transverse stability (90 degree stability, direction perpendicular to the fibers) of a UD layer. In one embodiment, the axial direction of the MDO film and fiber direction in an adjacent UD layer are rotationally offset, such as at 0 degrees, 45 degrees or at 90 degrees.

In some embodiments, it is also advantageous to pretreat the composite, the fabric (or alternatively the fibers from which the fabric is made) to allow the MDO film or matrix to better adhere to the fabric layer or composite. For example, the fabric or composite may be plasma treated, corona treated, scoured or subject to other types of pretreatment.

It will be appreciated that in one embodiment the ballistic articles described in the present application consist of a single layer of MDO film attached to a single layer of fabric, such that the MDO film is only found on one side of the fabric. Alternatively, MDO film may be laminated or bound to both sides of a fabric. In some embodiments, the MDO film is bound to only a portion of a layer of fabric.

Other embodiments include constructions where multiple layers of fabric are laminated between adjacent layers of MDO film. The embodiments described herein also include those made from different combinations of MDO film and fabric. For example in one embodiment layers of MDO film can be interspersed with layers of unidirectional fabric. Often, at least one external layer of the article will be a layer of MDO film.

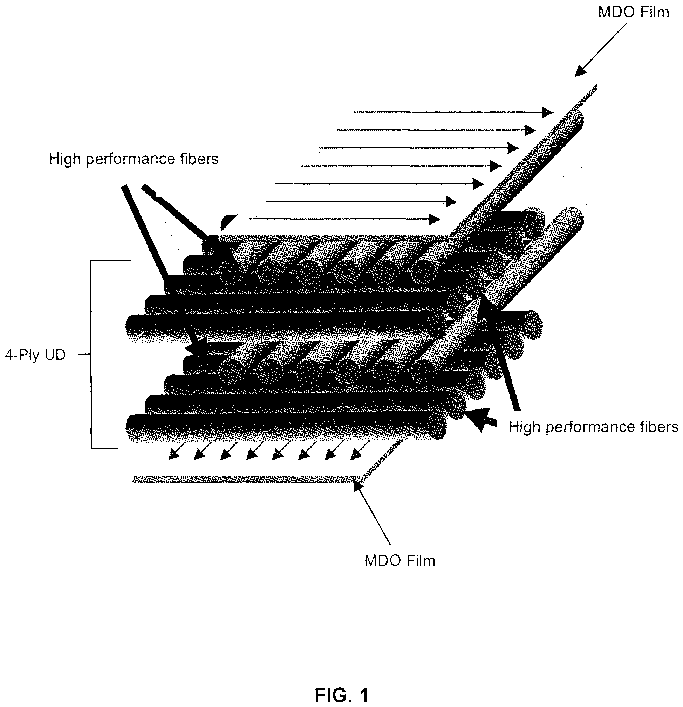

Figure 1 shows one embodiment of a ballistic resistant composite consisting of a six-layer laminate made with four plies of unidirectional fabric and two exterior layers of MDO film. Typically, the plies of unidirectional fabric are contained within a matrix (not shown). A layer of MDO adhesive film is bound to each of the external surface layers of the article. In one embodiment, layers of unidirectional fabric are cross-plied such that the direction of the high performance fibers in adjacent layers of UD fabric are perpendicular to one other. Optionally, the machine direction of the film is perpendicular to the fiber direction in the adjacent unidirectional fabric layer.

In one embodiment, the MDO film is used to bind single plies of UD material or any combination of layers in a multi-ply material. In one embodiment, the MDO film is the outer surface layer of a multi-laminate UD construction. In one embodiment, a plurality of layers of fabric are consolidated together in a matrix or resin and MDO film is then bound or laminated to the exterior fabric surfaces of the consolidated network.

Several advantages flow from the embodiments described herein. In one embodiment, the composites described herein exhibit improved abrasion resistance. As shown in Example 4, the ballistic performance of composites made with MDO film is comparable to that of composites made with regular film, while also having improved abrasion resistance.

In some embodiments, the reduced thickness of the MDO film compared to other film laminates reduces the overall thickness and weight of a ballistic article. In other embodiments, articles made according to the present description benefit from increased resistance to ballistic impacts.

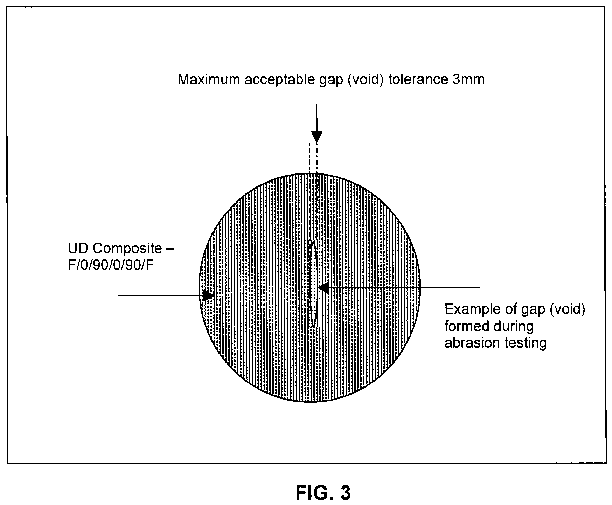

As known in the art, fabric constructions may be tested for abrasion resistance according to American Society for Testing and Materials (ASTM) standard ASTM 3886-99. Fabric constructions used in protective garments should generally exceed a threshold of 2000 cycles when tested according to ASTM D3886-99 using an inflated diaphragm apparatus. As shown in Examples 2 and 3, abrasion testing of articles made with MDO film according to ASTM D3886-99 not only surpassed the 2000 cycle limitation, but even after more than 10,000 rotations ballistic articles produced using MDO showed no signs of deterioration. No noticeable tears, holes or pores were formed in the 0.5mil MDO film during the various abrasion tests performed, as a results the fibers in the UD construction adjacent to the MDO outer layer were not impacted. Furthermore, with MDO film consistent and repeatable abrasion results were achieved when compared to regular blown polymer films. Protective materials made using regular grade films rarely passed the 2000 cycle requirement and even if a product passed the 2000 cycle requirement, repeatability of success was random and low. Additionally, those samples that passed still showed fiber degradation and gaps of less than 3mm or close to 3mm are formed by the time samples are exposed to 2000 rotations. In some cases, UD laminated with regular polyethylene film degraded with as little as 100 rotations. Figure 3 provides an illustration of the gap (void) tolerance for testing abrasion (3 mm) according to ASTM D3886-99.

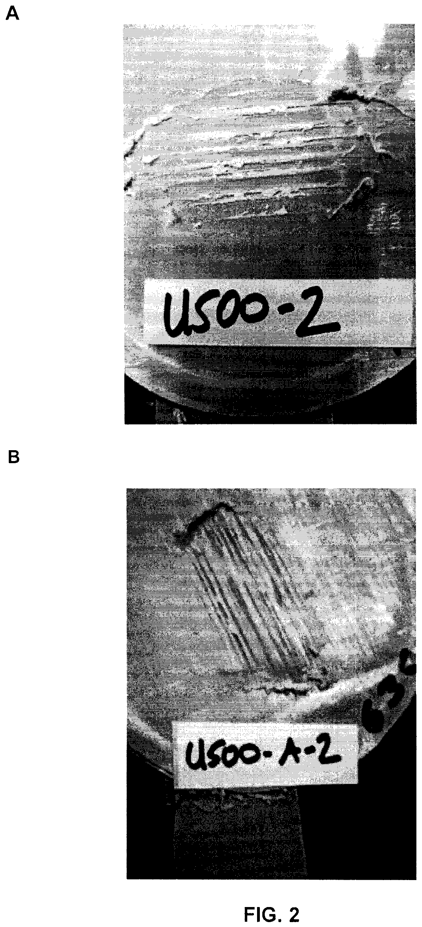

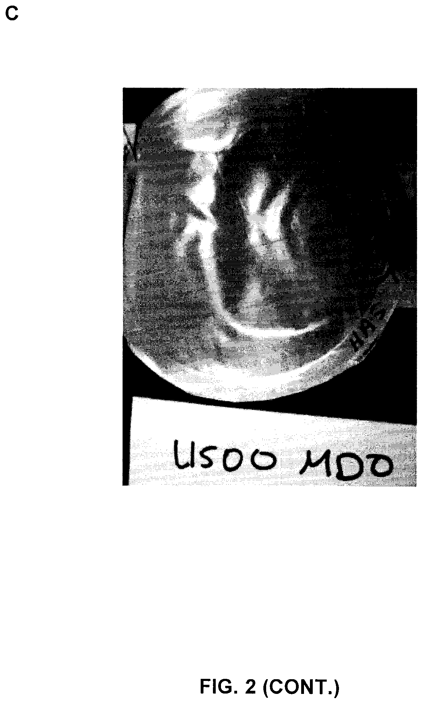

Figure 2 shows photographs of samples after abrasion resistance testing of (A) U500-Regular film material, (B) U500-Regular film with a slip agent and (C) U500-MDO film. Significant fiber degradation is observed in the samples made from U500 laminated with "Regular" film, as well as U500 laminated with "Regular" film with a precipitated calcium carbonate slip agent known under trade name Albaglos®. Samples comprising U500 laminated with MDO film (C) did not show degradation of fibers and the formation of gaps, and the film was still intact on the surface of the article.

In some embodiments the MDO film also acts as a barrier to water and other materials that may negatively affect the ballistic performance of the fabric layer.

In one embodiment there is provided articles comprising a plurality of ballistic resistant composites as described herein arranged in a stack. In one embodiment, the protective materials or articles described herein comprise a slip agent between adjacent layers of materials in a stack. For example, layers of ballistic resistant composites can be arranged in a 'stack' and combined, such as in an envelope or by point stitching around the periphery, to allow for relative movement of adjacent layers for use in soft-armor applications. In other embodiments, the ballistic resistant composites described herein can be combined and used in hard-armor applications.

Articles that may benefit from being manufactured from the ballistic resistant composites described in the present application include, but are not limited to, soft body armor, hard personal armor plates and shields, vehicle armor, bomb blankets and suits, mine clearance suits, helmets, electrical blast suppression blankets, fragmentation vests, firefighters' turn-out gear, heat and flame resistant work-wear, articles for knife protection, articles resistant to penetration by sharp objects, chainsaw chaps and cut resistant aprons.

The following non-limiting examples are illustrative of the present disclosure:

### EXAMPLES

### Example 1: Abrasion Resistance of U500 Protective Materials With and Without Slip Agents.

Samples of UD protective materials were tested according to ASTM D3886-99 (Stoll Abrasion Test Method) using an inflated diaphragm apparatus with the following parameters:
- Load: 5lb
- Pressure: 4 psi
- Abradant: Against itself
- Type of Abrasion: Multidirectional

Two samples are required for the Stoll Abrasion Test Method (ASTM 3886-99). A circular piece is mounted on an inflated diaphragm apparatus, which rotates 360 degrees for the duration of the test. The second piece is a rectangular sample, which is mounted to the test apparatus and moves longitudinally for the duration of the test. The circular and rectangular pieces are abraded against each other and the number of cycles to wear is recorded. The more cycles a set of samples can tolerate without generating any gaps or signs or product deterioration the greater the abrasion resistance properties of a fabric.

Samples of U500 composite UD material were tested for abrasion resistance both with and without the use of an Albaglos™ slip agent.

"Regular" U500 composite UD is a multiply unidirectional product produced using Kevlar K129 fiber 1580dtex and 17% Prinlin matrix in 0/90/0/90 configuration with two 0.25 mil (6.4 microns) polyethylene thermoplastic films laminated to the outer surfaces. The final configuration of the product is f/0/90/0/90/f, where 0/90/0/90 refers to consolidation angle of the mono UD layers and "f" refers to film. "Regular" U500 product construction is made with 0.25mil regular polyethylene film.

As shown in Table 1, the use of a slip agent did not generally show any significant improvement in the abrasion resistance of the material. Furthermore, although some of the U500-Regular test samples exceeded the 2000 cycle threshold, these samples showed wear although gaps of greater than 3 mm were not formed in the test sheet. In other samples, abrasion testing rapidly led to the degradation of the fabric layer and gaps of greater than 3 mm in as few as 24 cycles.

**Table 1: Abrasion testing of U500-Regular and U500-A (slip agent) laminates**

| **Test No. (No. of samples)** | **Circular Piece - Film Type** | **Rectangular Piece - Film Type** | **Fiber Direction of Rectangular Piece** | **Number of cycles fabric withstood without degrading** | **Tested Sample - Physical Observation** |
|---|---|---|---|---|---|
| 1 (5) | U500 A - Regular (slip agent) | U500 A - Regular (slip agent) | 0 Degree | 200 | All samples showed film wear and formation of gap in top UD sheet. Top UD sheet is the layer adjacent to film. Level of deterioration was same in rectangular and circular test pieces. *Test terminated after 2500 cycles. |
| | | | | >2500 * | |
| | | | | 630 | |
| | | | | 201 | |
| | | | | 240 | |
| | | | | | |
| 2 (5) | U500 A - Regular (slip agent) | U500 A - Regular (slip agent) | 90 Degree | 205 | Rectangular pieces deteriorated easily - film and top UD layers fell apart. |
| | | | | 200 | |
| | | | | 230 | |
| | | | | 198 | |
| | | | | 223 | |
| 3(5) | U500 - Regular | U500 - Regular | 0 Degree | >2500 | Both rectangular and circular pieces showed wear, however gap of >3mm was not formed in UD sheet. |
| | | | | >2500 | |
| | | | | >7765 | |
| | | | | >2500 | |
| | | | | >2500 | |
| 4(5) | U500 - Regular | U500 - Regular | 90 Degree | >2500 | Both rectangular and circular pieces showed wear, however gap of >3mm was not formed in UD sheet. |
| | | | | >2500 | |
| | | | | > 2540 | |
| | | | | > 2511 | |
| | | | | >2500 | |
| 5 (5) | U500 - Regular | U500 - Regular | 0 Degree | 125 | Both rectangular and circular pieces showed wear. Sample that survived >2500 rotations: showed film wear and gap started to form, however it was less than 3mm. Test terminated after 2500 cycles. |
| | | | | 752 | |
| | | | | 181 | |
| | | | | 204 | |
| | | | | >2500 | |
| | | | | | |
| 6 (5) | U500 - Regular | U500 - Regular | 90 Degree | 24 | Both rectangular and circular pieces showed wear, however gap of >3mm was not formed in UD sheet. |
| | | | | 115 | |
| | | | | 106 | |
| | | | | 241 | |
| | | | | 411 | |

### Example 2: Comparative Testing of U500 and U500-MDO

Abrasion testing was performed on samples of protective laminates comprising Regular U500 fabric (as per Example 1) made with polyethylene film (2 x 0.25 mil (6.4 microns), end construction f/0/90/0/90/f) and U500 UD fabric made with MDO film (2 x 0.5 mil (12.7 microns), end construction F/0/90/0/90/F). Testing was performed according to ASTM D3886-99 using an inflated diaphragm apparatus with the following parameters:
- Load: 51b
- Pressure: 4 psi
- Abradant: Against itself
- Type of Abrasion: Multidirectional

Testing was performed until the 1^{st} layer of fabric yarns separated at 3 mm in width before or at 2500 cycles, whichever came first. Samples were tested using both the low (side "A") and high (side "B") resin sides abrading against the low and high resin sides of the test samples. The low resin side refers to the side where the UD fibers have less resin compared to its opposite side due to the settling of resin to the bottom side of the layer as the layers of UD are formed. Film is lightly adhered to the low resin side, whereas on the opposite side (the high resin side) the bond between film and UD is relatively stronger. Results are shown in Tables 2 and 3.

**Table 2: Abrasion testing of U500-Regular film laminates**

| **Test No. (No. of samples)** | **Circular Piece - Film Type** | **Rectangular Piece - Film Type** | **Fiber Direction of Rectangular Piece** | **Number of cycles fabric withstood without degrading** | **Tested Sample - Physical Observation** |
|---|---|---|---|---|---|
| 3 (3) | U500 - Regular | U500 - Regular | 0 Degree only tested (Side A to A) | >2500 | Both rectangular and circular pieces showed wear. Film degraded and fibers showed signs of degradations. Gaps began to form, however due to filament entanglement gap of >3mm was not formed. Test terminated after 2,500 cycles |
| | | | | >2500 | |
| | | | | >2500 | |
| 3 (3) | U500 - Regular | U500 - Regular | 0 Degree only tested (Side A to B) | >2500 | |
| | | | | >2500 | |
| | | | | >2500 | |
| 3 (3) | U500 - Regular | U500-Regular | 0 Degree only tested (Side B to B) | 198 | |
| | | | | >2500 | |
| | | | | >2500 | |
| 3 (3) | U500 - Regular | U500-Regular | 0 Degree only tested (Side B to A) | 144 | |
| | | | | >2500 | |
| | | | | >2500 | |

**Table 3: Abrasion testing of U500-MDO test samples**

| **Test No. (No. of samples)** | **Circular Piece - Film Type** | **Rectangular Piece - Film Type** | **Fiber Direction of Rectangular Piece** | **Number of cycles fabric withstood without degrading** | **Tested Sample - Physical Observation** |
|---|---|---|---|---|---|
| 3 (3) | U500 - MDO | U500 - MDO | 0 Degree only tested (Side A to A) | >2500 | Consistent performance achieved with all 12 samples. Film showed no signs of wear. No impact on fibers. |
| | | | | >2500 | |
| | | | | >2500 | |
| 3 (3) | U500 - MDO | U500 - MDO | 0 Degree only tested (Side A to B) | >2500 | |
| | | | | >2500 | |
| | | | | >2500 | |
| 3 (3) | U500 - MDO | U500 - MDO | 0 Degree only tested (Side B to B) | >2500 | |
| | | | | >2500 | |
| | | | | >2500 | |
| 3 (3) | U500 - MDO | U500 - MDO | 0 Degree only tested (Side B to A) | >2500 | |
| | | | | >2500 | |
| | | | | >2500 | |

Remarkably, all of the U500-MDO samples tested exceeded the test endpoint of 2500 cycles and showed no signs of wear. In contrast, both the circular and rectangular U500-Regular test pieces showed wear and both the film and fibers showed signs of degradation. Furthermore, while a number of the U500-Regular samples passed the 2500 cycle endpoint, gaps began to form, however due to filament entanglement these gaps were less than 3 mm.

### Example 3: Additional Testing of UD-MDO Laminates

Additional abrasion testing was performed on samples consisting of U500-Regular (f/0/90/0/90/f where f=0.25mil regular PE film), U500-MDO with film on both sides (F/0/90/0/90/F where F=0.5mil MDO PE film) and U500-MDO with film on one side (F/0/90/0/90, where F = 0.5mil MDO PE film) protective laminates. Testing was performed according to ASTM D3886-99 using an inflated diaphragm apparatus with the following parameters:
- Load: 5lb
- Pressure: 4 psi
- Type of Abrasion: Multidirectional

Samples of U500-MDO were abraded against U500-Regular, U500-MDO against U500-MDO as well as the film side of U500 MDO film laminated on one side abraded against the fiber side of a piece of U500-MDO also laminated on one side. Results are shown in Table 4.

**Table 4: Additional testing of U500-MDO and U500-Regular laminates**

| **Test No. (No. of samples)** | **Circular Piece-Film Type** | **Rectangular Piece-Film Type** | **Fiber Direction of Rectangular Piece** | **Number of cycles fabric withstood without degrading** | **Tested Sample - Physical Observation** |
|---|---|---|---|---|---|
| 4 (2) | U500 - MDO | U500 - Regular | 0 Degree | >2500 | Film degradation on both samples was noted, however damage to fibers was noted. |
| | | | 90 Degree | 1210 | 90degree (U500-Regular): both film and UD layer deteriorated. |
| 4 (2) | U500 - MDO | U500 - MDO | 0 Degree | >10,000 | No degradation to film or fibers noted on both samples. |
| | | | 90 Degree | >10,000 | No degradation to film or fibers noted on both samples. |
| 4 (2) | U500 - MDO with film laminated on one side only (film side tested) | U500-MDO (fiber side facing circular piece) | 0 Degree | >10,000 | No degradation noted on circular test piece. Minor filamentation formed on rectangular test piece, however no gap was formed. |
| | | | 90 Degree | >10,000 | No degradation noted on circular test piece. Rectangular piece deteriorated (one layer only) |

Abrasion testing between articles that were both covered with MDO film showed no or only very minor degradation of the film or fibers in the UD fabric. UD samples tested for abrasion with the fiber direction of the rectangular piece at 90 degrees degraded more quickly that samples with the fiber direction of the rectangular piece at 0 degrees. Testing of samples with the fiber direction of the abrading surface layer of the rectangular piece at 90 degrees to the direction of the abrading movement generally results in lower abrasion resistance due to the relative weakness of a UD layer in an axis perpendicular to the fiber direction.

However, samples with laminated with MDO film showed excellent abrasion resistance with the fiber direction of the abrading surface layer at both a 0 degree orientation and a 90 degree orientation.

### Example 4: Ballistic Testing of Composites Made with MDO film or Regular Film

UD composites laminated with either MDO polyethylene film or regular polyethylene film were tested for ballistic resistance (V₅₀ values) with either 9 mm Remington or .44 magnum Speer projectiles. V₅₀ refers to the ballistic caliber velocity at which 50 percent of the shots are expected to penetrate a given article and the remaining 50% of shots are expected to be stopped by the ballistic resistant article. The higher the V50 value, the greater the resistance properties of a ballistic article.

Each UD composite layer consisted of 4 plies of UD Twaron 2000 1100 dtex fiber cross-plied in a 0/90/0/90 configuration with a styrene-isoprene-styrene block copolymer resin matrix comprising 17% of the total weight of the composite. 0.25 mil (6.4 microns) layers of regular polyethylene film were laminated to each side of the Regular-UD samples, while one 0.5 mil (12.7 microns) layer of MDO polyethylene film was laminated to a single side of the MDO-UD samples.

As shown in Table 5, V₅₀ values were determined for shoot packs consisting of 15 layers (9 mm Remington) or 24 layers (.44 magnum Speer) of stacked UD composites. The ballistic performance of UD composites laminated with MDO film is comparable to that using regular film. However, as shown in Examples 2 and 3, UD laminates produced using MDO film have better abrasion resistance compared to UD laminates produced with regular film. Penetration and ballistic-resistant materials made using MDO film therefore offer improved abrasion resistance without comprising ballistic performance.

**Table 5: Ballistic testing of UD composites made with regular or MDO polyethylene film**

| | **Layers** | **V50 (m/s)** | **STD Dev (m/s)** | **Abrasion Resistance** |
|---|---|---|---|---|
| **9mm FMJ Remington** | | | | |
| U006 17% Regular Film | 15 | 493 | 12 | Low & High Variability |
| U006 17% MDO | 15 | 480 | 1 | High & Consistent |
| | | | | |

| **.44 magnum Speer** | | | | |
|---|---|---|---|---|
| U006 17% Regular Film | 24 | 512 | 12 | Low & High Variability |
| U006 17% MDO | 24 | 498 | 10 | High & Consistent |

### Example 5: Abrasion Testing of UD Composites

UD composite samples were prepared using Twaron® T1000 3360dtex fibers, 17% Prinlin HV resin matrix and two layers of 0.25mil (6.4 microns) MDO PE film in f/0/90/0/90/f configuration with areal density 238g/m² +/- 6g/m². Abrasion testing was performed according to ASTM D3886-99. The circular piece of the UD composite was abraded against a rectangular piece of UD composite with long fiber orientation (0° direction fibers). Testing was also performed with the rectangular piece fiber orientation consisting of short fibers (90° direction fibers). As set out in Table 6, UD composites with MDO film showed excellent abrasion resistance.

**Table 6: Abrasion testing of UD composites with MDO film**

| **Test No. (No. of samples)** | **Circular Piece-Film Type** | **Rectangular Piece-Film Type** | **Fiber Direction of Rectangular Piece** | **Number of cycles fabric withstood without degrading** | **Tested Sample - Physical Observation** |
|---|---|---|---|---|---|
| 5 | 0.25mil MDO | 0.25mil MDO | 0 degree (long) | > 2500 | Minor degradation through film, however no gaps greater than 3mm were formed. |
| 5 | 0.25mil MDO | 0.25mil MDO | 90 degree (short) | 4/5 samples > 2500 | Minor degradation through film, however no gaps greater than 3mm were formed. |

While the above description includes a number of exemplary embodiments, many modifications, substitutions, changes, and equivalents will now occur to those of ordinary skill in the art.

## Claims

1. A ballistic resistant composite comprising one or more layers of fabric in contact with a matrix and a film, **characterized in that** the film is a machine direction oriented (MDO) film laminated to at least a portion of an exterior surface of the composite.

2. A ballistic resistant composite as claimed in claim 1, wherein the fabric is a woven fabric.

3. A ballistic resistant composite as claimed in claim 1, wherein the fabric is a non-woven fabric, optionally a unidirectional fabric.

4. A ballistic resistant composite as claimed in claim 3, wherein the unidirectional fabric comprises a plurality of fibers held in place by the matrix.

5. A ballistic resistant composite as claimed in claim 1, comprising 2 or more layers of a unidirectional fabric that are cross-plied such that the fiber direction in adjacent plies is perpendicular.

6. A ballistic resistant composite as claimed in any one of claims 1 to 5, wherein the MDO film is less than 2 mil (50.8 microns) thick.

7. A ballistic resistant composite as claimed in any one of claims 1 to 5, wherein the MDO film is less than 0.6 mil (15.2 microns) thick.

8. A ballistic resistant composite as claimed in any one of claims 1 to 7, wherein the MDO film comprises a material selected from polyethylene, polyvinylchloride, EVOH, nylon and polypropylene.

9. A ballistic resistant composite as claimed in any one of claims 1 to 8, wherein the MDO film has a draw ratio of between 1:2 and 1:10.

10. A ballistic resistant composite as claimed in any one of claims 1 to 9, wherein the fabric comprises a material selected from aramid fiber, extended chain polyethylene fiber, poly(p-phenylene-2,6-benzobisoxazole) (PBO) fibers, glass fibers and liquid crystal polymer-based fiber.

11. A ballistic resistant composite as claimed in any one of claims 1 to 10, wherein the matrix comprises an elastomeric resin selected from styrenic block copolymers, polyisoprene, ethylene-propylene copolymers, ethylene acrylic acid copolymer, nitrile butadiene rubber, polyvinyl butyral, ethylene vinyl acetate copolymer, polyketones, polychloroprene, polyvinyl acetate, polyisobutylene and polyether block amide.

12. A ballistic resistant composite as claimed in claim 11, wherein the matrix is a styrene-isoprene-styrene block copolymer.

13. A ballistic resistant composite as claimed in any one of any one of claims 1 to 12, wherein when tested according to ASTM D3886-99 the composite exceeds an abrasion resistant threshold of greater than 2,500 cycles without a separation of greater than 3 mm in a first layer of fabric yarns adjacent to the MDO film.

14. A ballistic resistant article wherein the article comprises a plurality of the ballistic resistant composites of any one of claims 1 to 13.

15. A method of producing a ballistic-resistant article comprising one or more layers of fabric, a matrix and a film, wherein the film is a machine direction oriented film and **characterized in that** the method comprises
applying the machine direction oriented film onto at least one exterior surface of a consolidated network of the one or more layers of fabric and the matrix;
laminating the machine direction oriented film to the exterior surface of the consolidated network.

## Patentansprüche

1. Ballistisch widerstandsfähiger Verbundwerkstoff, der eine oder mehr Schichten Stoff in Kontakt mit einer Matrix und einer Folie umfasst, **dadurch gekennzeichnet, dass** die Folie eine in Maschinenrichtung ausgerichtete Folie (MDO, Machine Direction Oriented) ist, die mindestens an einen Abschnitt einer Außenoberfläche des Verbundwerkstoffs laminiert ist.

2. Ballistisch widerstandsfähiger Verbundwerkstoff nach Anspruch 1, wobei der Stoff ein Webstoff ist.

3. Ballistisch widerstandsfähiger Verbundwerkstoff nach Anspruch 1, wobei der Stoff ein Vliesstoff ist, optional ein unidirektionaler Stoff.

4. Ballistisch widerstandsfähiger Verbundwerkstoff nach Anspruch 3, wobei der unidirektionale Stoff eine Mehrzahl von Fasern umfasst, die durch die Matrix in Position gehalten werden.

5. Ballistisch widerstandsfähiger Verbundwerkstoff nach Anspruch 1, der 2 oder mehr Schichten eines unidirektionalen Stoffs umfasst, die derart über Kreuz gelegt sind, dass die Faserrichtung in benachbarten Lagen im rechten Winkel liegt.

6. Ballistisch widerstandsfähiger Verbundwerkstoff nach einem der Ansprüche 1 bis 5, wobei die MDO-Folie weniger als 2 mil (50,8 Mikron) dick ist.

7. Ballistisch widerstandsfähiger Verbundwerkstoff nach einem der Ansprüche 1 bis 5, wobei die MDO-Folie weniger als 0,6 mil (15,2 Mikron) dick ist.

8. Ballistisch widerstandsfähiger Verbundwerkstoff nach einem der Ansprüche 1 bis 7, wobei die MDO-Folie ein Material umfasst, das aus Polyethylen, Polyvinylchlorid, EVOH, Nylon und Polypropylen ausgewählt ist.

9. Ballistisch widerstandfähiger Verbundwerkstoff nach einem der Ansprüche 1 bis 8, wobei die MDO-Folie ein Ziehverhältnis von zwischen 1:2 und 1:10 aufweist.

10. Ballistisch widerstandsfähiger Verbundwerkstoff nach einem der Ansprüche 1 bis 9, wobei der Stoff ein Material umfasst, das ausgewählt ist aus Aramidfaser, langkettiger Polyethylenfaser, Poly(p-phenylen-2,6-Benzobisoxazol)- (PBO-) Fasern, Glasfasern und Flüssigkristallfaser auf Polymerbasis.

11. Ballistisch widerstandsfähiger Verbundwerkstoff nach einem der Ansprüche 1 bis 10, wobei die Matrix ein elastomeres Harz umfasst, ausgewählt aus Styrolblockcopolymeren, Polyisopren, Ethylen-Propylencopolymeren, Ethylenacrylsäurecopolymer, Nitrilbutadiengummi, Polyvinylbutyral, Ethylenvinylacetatcopolymer, Polyketonen, Polychloropren, Polyvinylacetat, Polyisobutylen und Polyetherblockamid.

12. Ballistisch widerstandsfähiger Verbundwerkstoff nach Anspruch 11, wobei die Matrix ein Styrol-Isopren-Styrolblockcopolymer ist.

13. Ballistisch widerstandsfähiger Verbundwerkstoff nach einem der Ansprüche 1 bis 12, wobei der Verbundwerkstoff bei Prüfung nach ASTM D3886-99 einen Abriebbeständigkeitsgrenzwert von mehr als 2500 Zyklen ohne eine Trennung von mehr als 3 mm in einer ersten Schicht von Textilgarnen, die an die MDO-Folie angrenzen, übertrifft.

14. Ballistisch widerstandsfähiger Artikel, wobei der Artikel eine Mehrzahl der ballistisch widerstandsfähigen Werkstoffe von einem der Ansprüche 1 bis 13 umfasst.

15. Verfahren zum Produzieren eines ballistisch widerstandsfähigen Artikels, der eine oder mehr Schichten Stoff, eine Matrix und eine Folie umfasst, wobei die Folie eine in Maschinenrichtung ausgerichtete Folie ist und **dadurch gekennzeichnet ist, dass** das Verfahren umfasst
Aufbringen der in Maschinenrichtung ausgerichteten Folie auf mindestens eine Außenfläche eines konsolidierten Netzwerks der einen oder mehr Stoffschichten und der Matrix;
Laminieren der in Maschinenrichtung ausgerichteten Folie auf die Außenfläche des konsolidierten Netzwerks.

## Revendications

1. Composite pare-balles comprenant une ou plusieurs couches d'étoffe en contact avec une matrice et un film **caractérisé en ce que** le film est un film orienté dans le sens machine (MDO) stratifié à au moins une partie d'une surface extérieure du composite.

2. Composite pare-balles selon la revendication 1 dans lequel l'étoffe est une étoffe tissée.

3. Composite pare-balles selon la revendication 1 dans lequel l'étoffe est une étoffe non tissée, éventuellement une étoffe unidirectionnelle.

4. Composite pare-balles selon la revendication 3 dans lequel l'étoffe unidirectionnelle comprend plusieurs fibres maintenues en place par la matrice.

5. Composite pare-balles selon la revendication 1 comprenant 2 ou plus de couches d'une étoffe unidirectionnelle qui sont entrecroisées de manière à ce que la direction de la fibre dans les plis adjacents soit perpendiculaire.

6. Composite pare-balles selon l'une quelconque des revendications 1 à 5 dans lequel l'épaisseur du film MDO est inférieure à 50,8 microns.

7. Composite pare-balles selon l'une quelconque des revendications 1 à 5 dans lequel l'épaisseur du film MDO est inférieure à 15,2 microns.

8. Composite pare-balles selon l'une quelconque des revendications 1 à 7 dans lequel le film MDO comprend un matériau sélectionné à partir de polyéthylène, de chlorure de polyvinyle, d'EVOH, de nylon et de polypropylène.

9. Composite pare-balles selon l'une quelconque des revendications 1 à 8 dans lequel le film MDO possède un rapport d'étirage compris entre 1:2 et 1:10.

10. Composite pare-balles selon l'une quelconque des revendications 1 à 9 dans lequel l'étoffe comprend un matériau sélectionné à partir de fibre aramide, de fibre de polyéthylène à chaîne étendue, de fibres de poly(p-phénylène-2,6-benzobisoxazole) (PBO), de fibres de verre et de fibre à base de polymère à cristaux liquides.

11. Composite pare-balles selon l'une quelconque des revendications 1 à 10 dans lequel la matrice comprend une résine élastomère sélectionnée à partir de copolymères blocs styréniques, de polysioprène, de copolymères éthylène-propylène, de copolymère d'acide acrylique et d'éthylène, de caoutchouc butadiène nitrile, de butyral de polyvinyle, de copolymère d'éthylène et d'acétate de vinyle, de polycétones, de polychloroprène, d'acétate de polyvinyle, de polyisobutylène et de polyéther bloc amide.

12. Composite pare-balles selon la revendication 11 dans lequel la matrice est un copolymère bloc styrène-isoprène-styrène.

13. Composite pare-balles selon l'une quelconque des revendications 1 à 12 dans lequel le composite, quand il est testé conformément à l'ASTM D3886-99, dépasse un seuil de résistance à l'abrasion de plus de 2 500 cycles sans séparation de plus de 3 mm dans une première couche de fils d'étoffe adjacente au film MDO.

14. Article pare-balles dans lequel l'article comprend plusieurs composites pare-balles selon l'une quelconque des revendications 1 à 13.

15. Procédé de production d'un article pare-balles comprenant une ou plusieurs couches d'étoffe, une matrice et un film dans lequel le film est orienté dans le sens machine et **caractérisé en ce que** le procédé comprend l'application du film orienté dans le sens machine sur au moins une surface extérieure d'un réseau consolidé de la ou des couches d'étoffe et de la matrice ;
la stratification du film orienté dans le sens machine à la surface extérieure du réseau consolidé.
